# EUROPEAN PATENT SPECIFICATION

(11) **EP 1 293 479 B1**
(45) Date of publication and mention of the grant of the patent: **04.06.2008**
(21) Application number: 00977887.9
(22) Date of filing: 24.11.2000
(51) Int. Cl.: C01G 1/00, B01J 23/20

(54) **MESO-POROUS TRANSITION METAL OXIDE HAVING CRYSTALLIZED PORE WALL AND METHOD FOR PREPARING THE SAME**
MESOPORÖSES ÜBERGANGSMETALLOXID MIT KRISTALLINEN PORENWÄNDEN UND VERFAHREN ZUR HERSTELLUNG DESSELBEN
OXYDE DE METAL DE TRANSITION MESOPOREUX AYANT UNE PAROI DE PORE CRISTALLISEE, ET SON PROCEDE DE PREPARATION

(30) Priority: 12.06.2000 JP 2000175306
(43) Date of publication of application: 19.03.2003
(73) Proprietor: Japan Science and Technology Agency, Kawaguchi-shi Saitama (JP)
(72) Inventor: DOMEN, Kazunari, Kanagawa-ken 228-0803 (JP); LI, Byonjin, Tokyo 194-0001 (JP); NOMURA, Junko, Yamato-shi Kanagawa-ken 242-0029 (JP)
(74) Representative: Albrecht, Thomas
(86) International application number: PCT/JP2000/008266
(87) International publication number: WO 2001/096242

(56) References cited:
- JP-A- 10 182 144
- JP-A- 10 273 320
- JP-A- 11 079 743
- JP-A- 2001 031 422
- US-A- 5 380 691
- PEIDONG YANG ET AL: "Block copolymer templating syntheses of mesoporous metal oxides with large ordering lengths and semicrystalline framework" CHEMISTRY OF MATERIALS, AMERICAN CHEMICAL SOCIETY, WASHINGTON, US, vol. 11, no. 10, October 1999 (1999-10), pages 2813-2826, XP002162652 ISSN: 0897-4756
- PEIDONG YANG ET AL: "Generalized syntheses of large-pore mesoporous metal oxides with semicrystalline frameworks" NATURE, MACMILLAN JOURNALS LTD. LONDON, GB, vol. 396, 12 November 1998 (1998-11-12), pages 152-155, XP002162650 ISSN: 0028-0836
- ANTONELLI D M ET AL: "LIGAND-ASSISTED LIQUID CRYSTAL TEMPLATING IN MESOPOROUS NIOBIUM OXIDE MOLECULAR SIEVES" INORGANIC CHEMISTRY, AMERICAN CHEMICAL SOCIETY, EASTON, US, vol. 35, no. 11, 1996, pages 3126-3136, XP000576767 ISSN: 0020-1669
- VITTORIO LUCA ET AL: "SYNTHESIS AND CHARACTERIZATION OF MESOSTRUCTURED VANADIUM OXIDE" CHEMISTRY OF MATERIALS, AMERICAN CHEMICAL SOCIETY, WASHINGTON, US, vol. 7, no. 12, 1 December 1995 (1995-12-01), pages 2220-2223, XP000626861 ISSN: 0897-4756
- ANTONELLI D M ET AL: "SYNTHESIS AND CHARACTERIZATION OF HEXAGONALLY PACKED MESOPOROUS TANTALUM OXIDE MOLECULAR SIEVES" CHEMISTRY OF MATERIALS, AMERICAN CHEMICAL SOCIETY, WASHINGTON, US, vol. 8, no. 4, 1996, pages 874-881, XP000576967 ISSN: 0897-4756
- YINGHONG YUE, ZI GAO: "Synthesis of mesoporous TiO2 with a crystalline framework" CHEMICAL COMMUNICATIONS - CHEMCOM, ROYAL SOCIETY OF CHEMISTRY, GB, 29 August 2000 (2000-08-29), pages 1755-1756, XP002293949 ISSN: 1359-7345

## Description

### FIELD OF THE INVENTION

The present invention relates to a meso-porous transition metal oxide characterizing the pore wall of meso pore have a crystalline structure, particularly, the crystalline structure is maintained over whole primary particles, further relates to the method for preparation for said meso-porous transition metal oxide. In the present invention, the term of meso pore means the fine pore whose pore size is from 2nm to 50nm especially, smaller than 15nm, further, means the fine pore (meso pore) characterizing that the nitrogen adsorption isotherm line raises rapidly at the closer region of P/P₀0.6 and becomes flat at over than P/P₀0.8 region.

### BACK GROUND OF THE INVENTION

It is well-known that the surfactant organizes silica into a variety of meso-porous structures through the mediation of electro static force, hydrogen bond, covalent bond or van der Waals interactions. The pore wall of meso-porous structural silica prepared by using the surfactant as a matrix is amorphous. Said method to form meso-porous structures is tried to apply to non-silica oxides. Due to a sporadic success, said trial is extended to the material which applies the physical characteristics such as electron transfer or magnetic interactions.

Regarding to the oxide such as TiO₂, ZrO₂, Al₂O₃, Nb₂O₅, Ta₂O₅, WO₃, HfO₂, SnO₂ or the metal oxide including mixed oxide such as SiAlO_{3.5}, Si₂AlO_{5.5}, SiTiO₄, ZrTiO₄, Al₂TiO₆ or ZrW₂O₈, there is a paper reporting that the material which has meso porous structure having thermally stable and ordered pore of relatively large size (up to 140 Å, 14nm) and which can be broadly applied is obtained [NATURE, Vol.396, 152-155 (1998): hereinafter shortened to Paper A].

In said paper, the following items are reported. Namely, the product original material is prepared by dissolving 1g of polyalkyleneoxide block copolymer [HO(CH₂CH₂O)₂₀(CH₂CH(CH₃)O)₇₀(CH₂CH₂OCH₂CH₂O)₂₀H, hereinafter shortened to EO₂₀PO₇₀O₂₀; Pluronic P-123, product of BASF] is dissolved into 10g of ethanol (EtOH). To this solution 0.01mol of the respective inorganic chloride precursor is added with vigorous stirring for half hour so as to obtain sol solution, said sol solution is poured into an open Petri dish, then placing it in the atmosphere of 40°C for 1 to 7 days to make it gelation. During said gelling process, the inorganic chloride precursor (chloride of transition metal) is hydrolyzed and polymerized, and organized to metal oxide network structure. Or, material to be coated, such as substrate is dipped into said sol solution, coated film is formed on the surface of substrate and a gel product is prepared according to above mentioned reaction. In this case, it is reported that the appearance of all as made products are transparent except the appearance of product derived from WO₃ is dark blue.

Then, it is reported that the obtained gel product is heated at 400°C for 5 hours and the surfactant is removed by this calcination process, and ZrO₂ having meso structure corresponding to the matrix of EO₂₀PO₇₀EO₂₀ is obtained.

And the authors of said paper are guessing that the formation of said structure is formed by way of mechanism which combines the self organization of the block copolymer and the complexation of inorganic species (segment of alkylene oxide forms crown ether type complex).

Further, said paper reports that although the pore wall of meso porous silica is amorphous, above mentioned pore wall of meso structure has a structure possessing crystalline domain of nano size (up to 30 Å, 3nm) in a comparatively thick amorphous wall.

Furthermore, in said paper, the sequence of atom (lattice surface) and chemical component (in which metal oxide is governable) of net work structure are considered by an X ray diffraction method (XRD) or by an energy dispersive type X ray spectroscopic method (EDX), and the ordered semi crystalline inorganic stereo network characteristic of meso structure is investigated by a conventional transmission electron microscope, and authors explain that the pore wall has a structure characterized that the nano crystalline smaller than 30 Å is embedded in an amorphous matrix.

Still further, regarding to the pore, by considering the N₂ adsorption/desorption isothermal characteristic, type of pore, porosity (smaller than approximately 50%) and pore size (50-140 Å) are investigated. According to the investigation by the inventors of the present invention, since the pore wall descried in said paper is composed of amorphous matrix, it is obvious that said pore wall has problems that thermal or hydrothermal stability is comparatively small and physically fragile.

The inventors of the present invention thought out that the method to dissolve above mentioned problems which meso size structure composed of well known metal oxide has is to make the metal oxide composing of pore wall crystallized.

Therefore, the object of the present invention is to provide a meso porous transition metal oxide characterized that the pore wall maintains crystalline structure over whole primary particles, and is to provide a method for preparation of said meso porous transition metal oxide having said crystalline structure.

Peidong Yang et al., "Block copolymer templating synthesis of meso porous metal oxides with large ordering lengths and semicrystalline framework", Chemistry of Materials, 1999, 11, 2813-2826 describe a simple and general procedure for the synthesis of ordered large-pore (up to 14 nm) mesoporous metal oxides, including TiO₂, ZrO₂, Nb₂O₅, Ta₂O₅, Al₂O₃, SiO₂, SnO₂, WO₃, HfO₂, and mixed oxides SiAlO_{y}, Al₂TiO_{y}, ZrTiO_{y}, SiTiO_{y}, ZrW₂O_{y}. However, this document does not disclose a mesoporous transition metal oxide characterized in that the pore wall maintains a crystalline structure over the whole primary particles of the meso pore wall.

David M. Antonelli et al., "Ligand-assisted liquid crystsal templating in mesoporous niobium oxide molecular sieves", Inorganic Chemistry, 1996, 35, 3126-3136 describe a systematic study of the factors governing formation factors governing the formation of Nb-TMS1, a niobium-based mesoporous hexagonally-packed transition metal oxide molecular sieve. The synthesis of this material was achieved through a novel ligand assisted liquid crystal templating mechanism in which a discrete covalent bond is used to direct the templating interaction between the organic and inorganic phases. However, the wall of the meso pores of the described transition metal oxide does not have a crystalline structure over the whole primary particules.

Vittorio Luca et al., "Synthesis and characterization of mesostructured vanadium oxide", Chemistry of Materials, 1995, 7, 2220-2223, also do not describe a mesoporous transition metal mixed oxide as claimed in the present invention.

Finally, David M. Antonelli and Jackie Y. Ying, Chemistry of Materials, 1996, 8, 874-881 describe the synthesis and characterization of Ta-TMS1, a new member of a growing family of hexagonally packed transition-metal oxide mesoporous oxide molecular sieves (termed TMS1). This reference relates to the preparation of mesoporous tantalum oxide. However, data relating to crystallinity are not mentioned and there is no recitation about the crystallinity.

### DISCLOSURE OF THE INVENTION

The first one of the present invention is the meso porous transition metal oxide characterized in that the pore wall of the meso pores has a crystalline structure which is maintained over the whole primary particles, wherein the pore wall of the meso pores has the crystalline structure from which diffraction peak by electron beam diffraction is observed, wherein the metals of the transition metal oxide are two or more kinds of metal elements selected from the group consisting of Zn, Zr, Nb, and Ta. Further desirably is the meso porous transition metal oxide characterized that the nitrogen adsorption isotherm line raises rapidly at the closer region of P/Po0.6 and becomes flat at over than P/Po0.8 region.

The second one of the present invention is the method for preparation of meso porous transition metal oxide characterized in that the pore wall of the meso pores has a crystalline structure which is maintained over the whole primary particles, wherein the pore wall of the meso pores has the crystalline structure from which diffraction peak by electron beam diffraction is observed, wherein the metals of the transition metal oxide are two or more kinds of metal elements selected from the group consisting of Zn, Zr, Nb and Ta, the method comprising, adding transition metal salts which are precursors of the transition metal oxide into a solution prepared by dissolving a polymer surfactant in an organic solvent and dissolving, transforming said transition metal salts to a sol solution by hydrolysis and polymerization, obtaining an aimed gel state product from said sol solution and carrying out a previous calcination on said product at the temperature of 400±50°C for 5-20 hours, then carrying out a secondary calcination at the temperature of 600-800°C for 10 minutes to 10 hours.
Desirably, the transition metal salt which is a precursor of the transition metal oxide is selected from a chloride and a nitrate.

### BRIEF ILLUSTRATION OF THE DRAWINGS

Fig.1 is the graph showing the relationship between the calcination temperature (removal of surfactant) of the gel product of Example 1, weight reduction (TGA:%) and exothermic (DTA).
Fig.2 is the graph showing the X-ray diffraction pattern of the meso porous transition metal oxide of Example 1.
Fig.3 is the graph showing N₂ adsorption isotherm line of product (A) obtained by the previous calcination process (400°C, for 20 hours) and product (B) obtained after the secondary calcination process (650°C, for 1 hours).
Fig.4 is the graph showing the distribution of fine pores of product (A) obtained by the previous calcination and product (B) obtained after the secondary calcination of Example 1.
Fig.5 is the electron beam diffraction pattern (picture) of whole primary particles after the secondary calcination of Example 1.
Fig.6 is the transmission electron microscope (TEM) image (picture) of the product after the secondary calcination of Example 1.
Fig.7 is the graph showing the X-ray diffraction pattern of meso porous transition metal oxide showing the crystalline structure of ZnNb₂O₆ of Example 2.
Fig.8 is the graph showing N₂ adsorption isotherm line of transition metal oxide of after the previous calcination and after the secondary calcination of Example 2.
Fig.9 is the graph showing the X-ray diffraction pattern of meso porous transition metal oxide showing the crystalline structure of Zr₆Nb₂O₁₇ of Example 3.
Fig.10 is the graph showing N₂ adsorption isotherm line of transition metal oxide of after the previous calcination and after the secondary calcination of Example 3.

The present invention will be illustrated more in detail according to the following description.
A. As a surfactant which is used for the formation of nano size fine pores of the present invention, the surfactant which is used in above mentioned paper can be used. That is, polyalkylene oxide block copolymer composed of olygomer (containing polymer) of ethylene glycol, olygomer (containing polymer) of polypropylene glycol and the compound prepared by etherification of an end group of said block copolymer using alcohol or phenol can be mentioned. These compounds are the desirable surfactant, because the toxicity of these compounds is very low. Further, besides these compounds, the compound which is used as the conventional template compound to form nano size pores can be used.
   The mole ratio of above mentioned surfactant to the metal salt forming above mentioned metal oxide is approximately from 40 to 60, and this ratio is not essentially different from that of the case disclosed in afore mentioned public known paper.
   The total volume of fine pores of metal oxide which can be obtained depends on the content and the size of nonionic surfactant contained in the starting solvent. Still more, the channel structure of meso pore size or the size depend on the molecule weight or size of above mentioned surfactant or non-aqueous solvent. Therefore, the amount and the size of the organic molecule to be used in the solvent are selected so that the desired meso pore-total volume and meso pore channel size can be obtained. As the water insoluble compound, besides alcohols such as ethanol, oxygen containing organic solvent such as ether or acetone, further, pyridine or aniline can be used.
B. As the transition metal salt, which is a precursor forming above mentioned transition metal oxide, the compound selected from the group consisting by chloride or nitride of above mentioned metal and voluntarily mixture of them can be used. Especially, the chloride is used as the desirable material.

Said transition metal oxide precursor is hydrolyzed and polymerized and transformed to the metal oxide network structure. The pre organization of meso structural fine pore systematized under the interaction with above mentioned surfactant is formed (fine pores are formed according to the removal of the surfactant by calcination).

As the transition metal, two or more kinds of elements selected from the group consisting of Zn, Zr, Nb, and Ta can be used.

### EXAMPLE

### Example 1

### Preparation of meso porous metal oxide

1g of nonionic surfactant (Pluronic L-121, L-101, L-61, L-64, L-31, P-123, P103, P-85, F-108, F-88 or F-68) and totally 0.005 to 0.015 mol of chloride of tantalum and niobium are added to 10g of normal alcohol (methanol, ethanol, propanol, buthanol or hexanol) with vigorous stirring at the room temperature for 30 minutes and obtain sol solution. Said sol solution is stood at 40°C for 1 to 24 days and the transparent specimen (gel) generates.

The generated transparent specimen is calcined (previous calcination) at the temperature of 400°C under the constant flow of the air for 5-20 hours. Then the calcination temperature is elevated to 650°C and the calcination is continued another 1 hour (secondary calcination) and the aimed product is obtained.

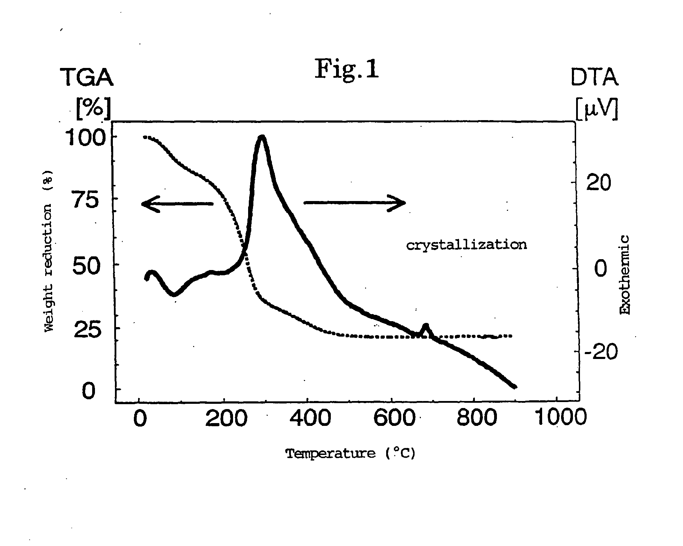

In the calcination process of above mentioned transparent specimen, the relationship between weight reduction (TGA:%), exothermic (DTA) and the calcination temperature (°C) is shown in Fig.1. The exothermic peak at 300°C is the peak of calcination of surfactant. And, the small peak at 680°C is the peak of crystallization of pore wall, that is, the peak means the crystallization exothermic peak.

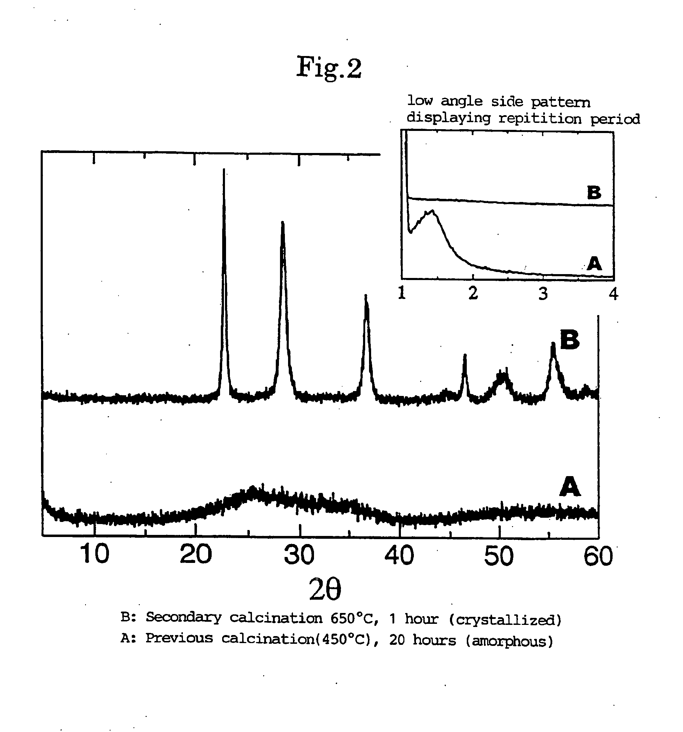

Fig.2 indicates the X-ray diffraction pattern of the meso porous transition metal oxide showing that the pore wall of obtained meso pore has crystalline structure.

In Fig.2, A is the X-ray diffraction pattern of product after the previous calcination (400°C, 20 hours amorphous). Any diffraction peak is not observed, and indicates that the pore wall is amorphous state. While, B is the X-ray diffraction pattern of product after the secondary calcination (650°C, 1 hour, crystallized). The small graph in the upper part is the low-angle side pattern displaying repetition period.

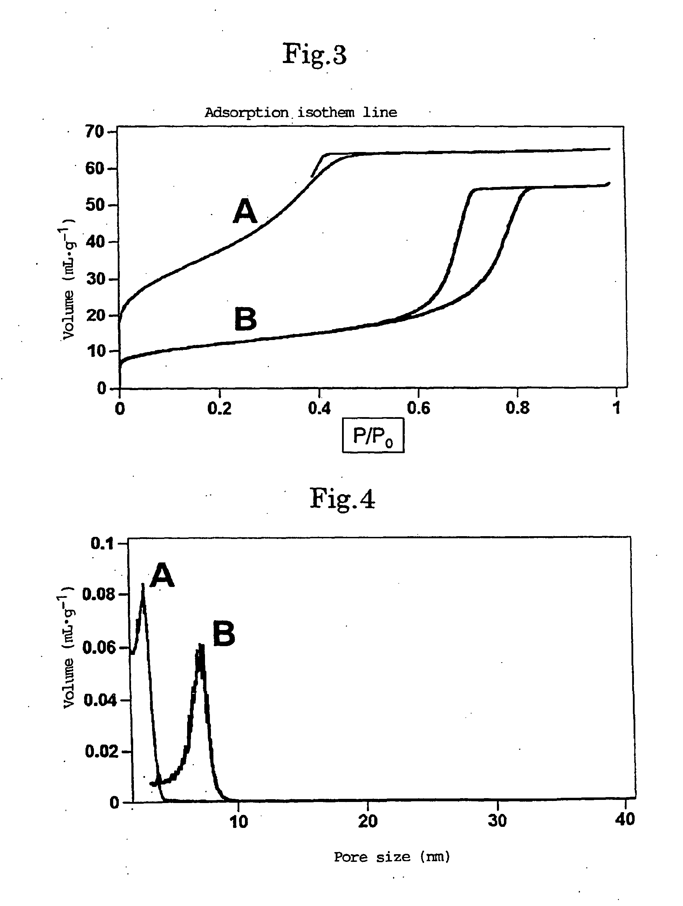

In Fig.3, N₂ adsorption isotherm lines of product after the previous calcination (A) and after the secondary calcination (B) are shown. When N₂ adsorption isotherm line A is compared with N₂ adsorption isotherm line B, from the adsorption characteristic of the product after second calcination, it is obviously understood that the radius of fine pore is large, and from the rising characteristic, it is understood that the product has uniform fine pores.

Fig.4, is the distribution of fine pores of product after the previous calcination (A) and after the secondary calcination (B) displayed by fine pore size, and is corresponding to the characteristic of Fig.3.

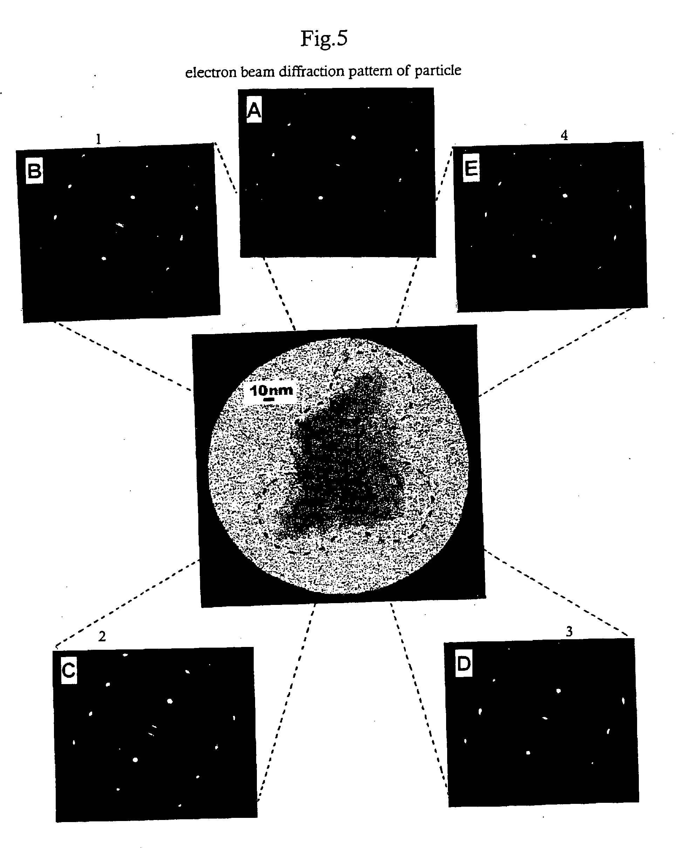

Fig.5 shows the whole electron beam diffraction pattern of product (primary particles) after the secondary calcination (B), and it is obviously understood that the whole is crystalline structure.

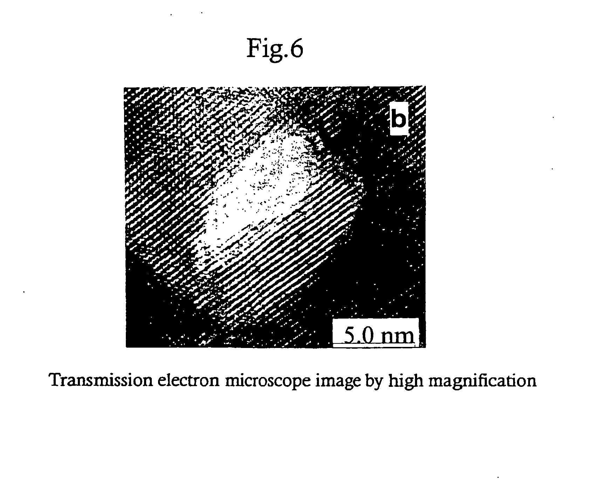

Fig.6 is a transmission electron microscope (TEM) picture of 800,000 magnifications, and the diffraction pattern of long period can be observed. And from this TEM picture it is also obviously understood that the whole pore wall is crystalline structure.

The specimens of the product are respectively exposed in the following conditions, namely, 600°C for 20 hours, hydrothermal atmosphere of 200°C for one day and 500kg/cm² for 10-20 hours. Then thermal stability, hydrothermal stability and pressure stability are measured by checking whether the original fine pore structure and pore wall characteristic are maintained as is or not. And the results show that the fine pores structure and pore wall characteristic are maintained stable.

### Example 2

### Preparation of meso porous metal oxide

1g of EO₂₀PO₇₀EO₂₀ (Pluronic P-123), further totally 0.005 to 0.015 mol of chloride of zinc and niobium are added to 10g of normal alcohol (ethanol, or butanol) with vigorous stirring at the room temperature for 30 minutes and obtain sol solution. Said sol solution is stood at 40°C for 1 to 30 days and the transparent specimen (gel) generates. The generated transparent specimen is calcined (previous calcination) at the temperature of 400°C under the constant flow of the air for 5-20 hours. Then the calcination temperature is elevated to 600°C and the calcination is continued another 10 minutes to 1 hour (secondary calcination) and the aimed product is obtained.

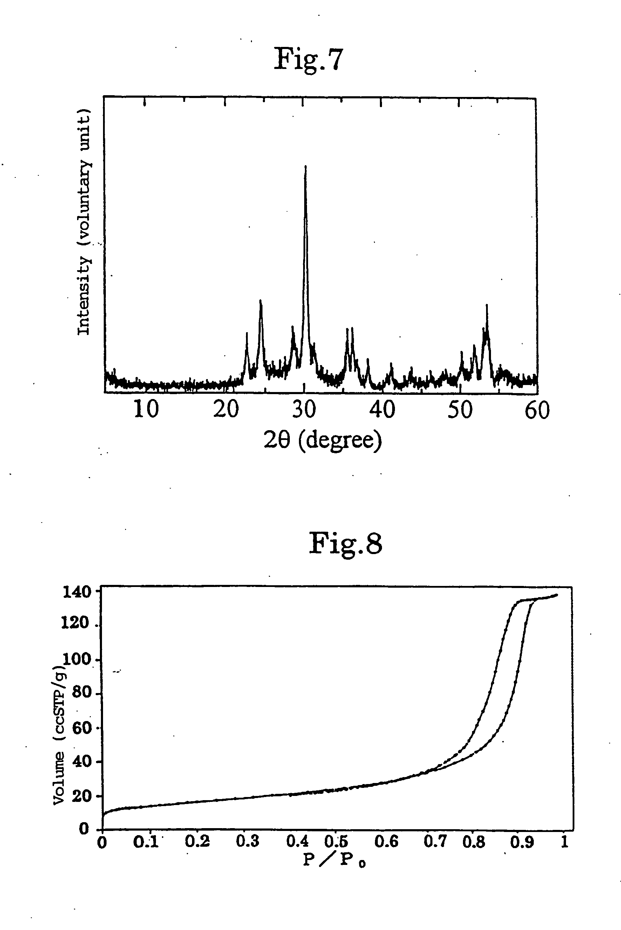

In Fig.7, X-ray diffraction pattern of obtained meso porous transition metal oxide having the crystalline structure of ZnNb₂O₆ is shown, and in Fig.8, N₂ adsorption isotherm lines of transition metal oxide of after the previous calcination and after the secondary calcination are shown.

### Example 3

### Preparation of meso porous metal oxide

1g of EO₂₀PO₇₀EO₂₀ (Pluronic P-123), further totally 0.005 to 0.015 mol of chloride of zirconium and niobium are added to 10g of ethanol with vigorous stirring at the room temperature for 30 minutes and obtain sol solution. Said sol solution is stood at 40°C for 1 to 30 days and the transparent specimen (gel) generates.

The generated transparent specimen is calcined (previous calcination) at the temperature of 400°C under the constant flow of the air for 5-20 hours. Then the calcination temperature is elevated to 750°C and the calcination is continued another 30 minutes to 1 hour (secondary calcination) and the aimed product is obtained.

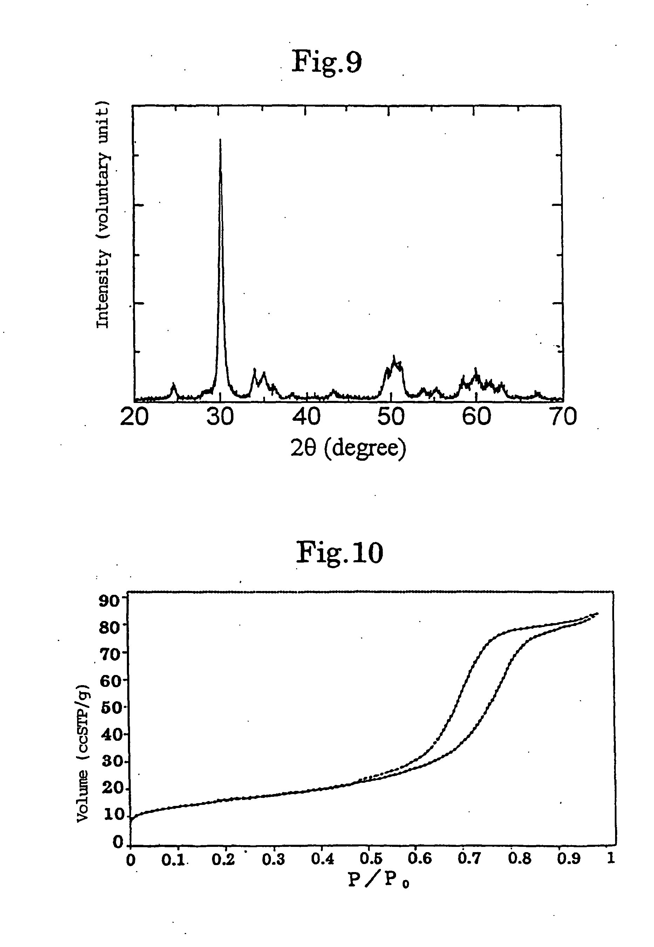

In Fig.9, X-ray diffraction pattern of meso porous transition metal oxide having the crystalline structure of obtained Zr₆Nb₂O₁₇ is shown, and in Fig.10, N₂ adsorption isotherm lines of transition metal oxide of after the previous calcination and after the secondary calcination are shown.

As mentioned above, tantalum and niobium mixed oxide, ZnNb₂O₆ and Zr₆Nb₂O₁₇ are illustrated. And it is natural that above mentioned method can be applied to the preparation of meso porous transition metal oxide characterizing that the pore wall of meso pore has a crystalline structure, as defined in the claims.

### POSSIBILITY FOR THE INDUSTRIAL USE

As mentioned above, the present invention involves an excellent effect which makes the provision possible, namely, to provide the material composed of transition metal oxide characterizing that the pore wall of meso pore has a crystalline structure, and having meso pore of uniform size and stable structure. The characteristic of uniform and stable meso pore which said material has can be broadly used in various fields, for example, uses in chemical field such as molecular sieving, catalyst having selective function or catalyst carrier and uses in development of various functional materials which use the special characteristics realized by the structural feature of meso size.

## Claims

1. A meso porous transition metal oxide **characterized in that** the pore wall of the meso pores has a crystalline structure which is maintained over the whole primary particles, wherein the pore wall of the meso pores has the crystalline structure from which diffraction peak by electron beam diffraction is observed, wherein the metals of the transition metal oxide are two or more kinds of metal elements selected from the group consisting of Zn, Zr, Nb and Ta.

2. The meso porous transition metal oxide according to claim 1, wherein the nitrogen adsorption isotherm line raises rapidly at the closer region of P/P₀0.6 and becomes flat at over than P/Po0.8 region.

3. A method for the preparation of a meso porous transition metal oxide **characterized in that** the pore wall of the meso pores has a crystalline structure which is maintained over the whole primary particles, wherein the pore wall of the meso pores has the crystalline structure from which diffraction peak by electron beam diffraction is observed, wherein the metals of the transition metal oxide are two or more kinds of metal elements selected from the group consisting of Zn, Zr, Nb and Ta, the method comprising, adding transition metal salts which are precursors of the transition metal oxide into a solution prepared by dissolving a polymer surfactant in an organic solvent and dissolving, transforming said transition metal salts to a sol solution by hydrolysis and polymerization, obtaining an aimed gel state product from said sol solution and carrying out a previous calcination on said product at the temperature of 400±50°C for 5-20 hours, then carrying out a secondary calcination at the temperature of 600-800°C for 10 minutes to 10 hours.

## Patentansprüche

1. Mesoporöses Übergangsmetalloxid, **dadurch** charakterisiert, dass die Porenwand der Mesoporen eine kristalline Struktur aufweist, die über die gesamten Primärpartikel aufrechterhalten wird, wobei die Porenwand der Mesoporen die kristalline Struktur aufweist, von der ein Beugungspeak durch Elektronenstrahlenbeugung beobachtet wird, wobei die Metalle des Übergangsmetalloxids zwei oder mehrere Arten Elemente sind, ausgewählt aus der Gruppe, bestehend aus Zn, Zr, Nb und Ta.

2. Mesoporöses Übergangsmetalloxid gemäß Anspruch 1, wobei die Stickstoffadsorptionsisotherme im näheren Gebiet von P/Pₒ0,6 schnell ansteigt und über das P/P₀0,8-Gebiet hinweg flach wird.

3. Verfahren zur Herstellung eines mesoporösen Übergangsmetalloxids, **dadurch** charakterisiert, dass die Porenwand der Mesoporen eine kristalline Struktur aufweist, die über die gesamten Primärpartikel aufrechterhalten wird, wobei die Porenwand der Mesoporen eine kristalline Struktur aufweist, von der ein Beugungspeak durch Elektronenstrahlenbeugung beobachtet wird, wobei die Metalle des Übergangsmetalloxids zwei oder mehr Arten von Metallelementen sind, ausgewählt aus der Gruppe, bestehend aus Zn, Zr, Nb und Ta, wobei das Verfahren umfasst: Zugabe von Übergangsmetallsalzen, die Precursor des Übergangsmetalloxids sind, zur einer Lösung, hergestellt durch Auflösen eines oberflächenaktiven Polymers bzw. Polymertensids in einem organischen Lösungsmittel und Auflösen, Transformieren der genannten Übergangsmetallsalze in eine Sollösung durch Hydrolyse und Polymerisation, wobei ein Zielprodukt im Gelzustand aus der genannten Sollösung erhalten wird, und Ausführen einer Vorkalzinierung am genannten Produkt bei der Temperatur von 400 ± 50°C für 5-20 Stunden, und anschließendes Ausführen einer Zweitkalzinierung bei einer Temperatur von 600-800°C für 10 Minuten bis 10 Stunden.

## Revendications

1. Oxyde de métal de transition mésoporeux **caractérisé en ce que** la paroi de pore des mésopores possède une structure cristalline qui est conservée sur la totalité des particules primaires, dans lequel la paroi de pore des mésopores possède la structure cristalline à partir de laquelle un pic de diffraction par diffraction d'un faisceau d'électrons est observé, dans lequel les métaux de l'oxyde de métal de transition sont deux types ou plus d'éléments métalliques choisis dans le groupe constitué par Zn, Zr, Nb et Ta.

2. Oxyde de métal de transition mésoporeux selon la revendication 1, dans lequel la courbe de l'isotherme d'adsorption de l'azote monte rapidement au voisinage de la région où P/P₀ = 0,6 et devient plate au-delà de la région où P/P₀ = 0,8.

3. Procédé de préparation d'un oxyde de métal de transition mésoporeux **caractérisé en ce que** la paroi de pore des mésopores possède une structure cristalline qui est conservée sur la totalité des particules primaires, dans lequel la paroi de pore des mésopores possède la structure cristalline à partir de laquelle un pic de diffraction par diffraction d'un faisceau d'électrons est observé, dans lequel les métaux de l'oxyde de métal de transition sont deux types ou plus d'éléments métalliques choisis dans le groupe constitué par Zn, Zr, Nb et Ta, le procédé comprenant l'ajout de sels de métaux de transition, lesquels sont les précurseurs de l'oxyde de métal de transition, dans une solution préparée en dissolvant un tensioactif polymère dans un solvant organique et la dissolution, la transformation desdits sels des métaux de transition en une solution de sol par hydrolyse et polymérisation, l'obtention d'un produit visé à l'état de gel à partir de ladite solution de sol et la mise en oeuvre d'une calcination primaire sur ledit produit à la température de 400 ± 50 °C pendant 5 à 20 heures, puis la mise en oeuvre d'une calcination secondaire à la température de 600 à 800 °C pendant 10 minutes à 10 heures.
